# EUROPEAN PATENT APPLICATION

(11) **EP 4 621 892 A1**
(43) Date of publication of application: **24.09.2025**
(21) Application number: 24164993.8
(22) Date of filing: 21.03.2024
(51) Int. Cl.: H01M 8/2432, C25B 1/04, C25B 9/70, H01M 8/248

(54) **A STACK ASSEMBLY WITH A LOAD APPLYING MECHANISM**

(71) Applicant: SolydEra SA, 1400 Yverdon-les-Bains (CH)
(72) Inventor: Wuillemin, Zacharie, 1096 Cully (CH); Beetschen, Cédric, 1302 Vufflens-la-Ville (CH)
(74) Representative: Hepp Wenger Ryffel AG

(57) **Abstract**

The present invention refers to a stack assembly (27) for a solid oxide fuel cell (SOFC) or solid oxide electrolyser (SOE)device. The assembly (27) comprises:
- a housing,
- at least one stack arrangement (1) mounted within said housing,
the at least one stack arrangement (1) comprising:
- a base plate (3),
- a top plate (2),
- a stack (S) mounted between said base plate (3) and said top plate (2),
- at least one sealing element disposed in the at least one stack arrangement (1) to provide a fluid-tight stack assembly (27),
- a load applying mechanism with a first tightening unit (5) adapted to apply a tightening load to the at least one stack arrangement (1) in stacking direction.

The load applying mechanism comprises a second tightening unit (4) adapted to apply a tightening load to said manifold section of the stack (S). The first tightening unit (5) and the second tightening unit (4) are independent of each other.

## Description

The present invention refers to a stack assembly for a solid oxide fuel cell, solid oxide electrolyser, or reversible solid oxide cell, and an electrochemical device with such a stack assembly according to the preamble of the independent claims.

Among the different electrochemical stack concepts, stacks that accommodate planar electrochemical cells are attractive because of their high power density and their low preparation costs. Planar stacks that operate at high temperature, such as solid oxide cells or molten carbonate cells, have to deal with thermomechanical stress that may result from the high temperature operation. If not handled properly, such stress may cause irreversible deformation, or even detrimental failure inside the stack, which limits its operational lifetime. This is already true for stacks with one electrochemical cell per repeating element, with the stress typically increasing with cell size, but it may become even more prominent for stacks that integrate arrays of multiple cells in each repeating element, and modules that integrate multiple electrochemical stacks.

Mechanical stress can manifest itself on different levels, i.e. within the stack, or between the stack and its surroundings to which it is mechanically connected.

The build-up of thermomechanical stress within the stack may arise from mismatches of thermal expansion between the stack materials, from physico-chemical alterations of the used materials, or from thermal gradients within the stack. Such stress can be alleviated by plasticity or creep of involved materials, or by the integration of mechanically compliant layers (EP3117477B1, EP2766947A1, EP2174379A1). Another obvious way to alleviate stress is by changing the operating conditions, such that the amount of heat produced in the stack is reduced and more easily dissipated.

Alleviation of mechanical stress between the stack and its surrounding, which is basically caused by the same phenomena as those present within the stack (thermal expansion coefficient (TEC) mismatch, physico-chemical alterations, thermal gradients), is typically done by including stress relief sections such as bellows in the parts that physically connect to the stack (US7008715B2, JP5242933B2). In the case of accommodating multiple stacks in the module, the stacks are preferably put in the same hot enclosure in order to keep thermal gradients low (US10777838B2) .

A complicating factor is that, whilst dealing with thermomechanical stress, mechanical compression of the stack needs to be maintained. A logical choice, in order to realize a compact design, is to include materials in the close vicinity of the stack that exert compression on the stack (US7001685B2, EP2483961B1, EP1316124B1, EP2766947A1). This requires the use of materials that at least withstand the operating temperature of the stack (EP3391451A1, US20030235723A1), and that retain their compressive properties throughout the operational lifetime of the system, which is typically cost prohibitive.

Given the limitations in the aforementioned examples, the use of alternative ways of compression that avoid exposure of critical components to a high temperature are considered as well. In particular tie rods that attach to the stack clamping plates, and that extend towards a colder section of the module where they are connected to a set of washers or springs, have gained popularity (EP1774612A1).

Another approach can be found in EP2135317A2, where a tensioning block provided in the openings of the cell housing presses against the stack due to the presence of bracing elements disposed at the exterior of the module.

Yet another approach is mentioned in CN109244516B, which discloses an X-shaped compression frame that presses against the top clamping plate of the planar stack in conjunction with a spring load assembly that is exposed to milder temperatures.

The prior art, however, is silent about an adequate solution to deal with mechanical stress when integrating multiple stacks of planar electrochemical cells in a compact enclosure. Furthermore, the prior art lacks an arrangement which deals with the thermomechanical stress and maintains the mechanical compression of the stack and at the same time provides sufficient gas tightness in all sections in the stack, the requirements of which may vary depending on the stack design. One of the reasons might be that different conditions have to be applied to the compression of the stack and the mechanical force that is acting on the manifold section that takes care of the gas distribution within the stack.

Gas distribution by means of a manifold section that is an integral part of the stack is called internal manifolding. Internal manifolding may be used to distribute one fluid or multiple fluids, depending on the stack design. In case only one fluid is distributed by means of internal manifolding, it is typically the fluid that may need to be utilized in the reactor to its highest extent. In solid oxide fuel cells, this is typically the fuel. In solid oxide electrolyzers this is typically the gas that is electrolyzed, for example steam. Other fluids such as air and that are needed to provide oxygen to the oxygen electrode in fuel cell operation, or that may be used during electrolysis operation as a sweep gas to remove oxygen gas produced at the oxygen electrode, may be provided through an internal manifold structure as well, or may be blown through the stack, the flow channels through which the fluid is entering the stack are principally in open communication with the hot zone compartment or a flange that typically serves more than one repeating element in the stack, thus following an external manifolding approach.

Therefore, it is at least one objective of the present invention to overcome the drawbacks of the prior art. It is in particular an objective to provide a solution for dealing with mechanical stress in a multiple stack assembly.

The objectives are solved by the subject-matter of the independent claims. Preferred embodiments are described with regard to the dependent claims.

A first aspect of the invention refers to a stack assembly for a solid oxide fuel cell (SOFC), solid oxide electrolyser (SOE), or reversible solid oxide cell device. The stack assembly comprises:
- a housing,
- at least one stack arrangement mounted within said housing.

The at least one stack arrangement comprises:
- a base plate,
- a top plate,
- a stack mounted between said base plate and said top plate,
- at least one sealing element disposed in the at least one stack arrangement to provide a fluid-tight stack assembly,
- a manifold section for distributing at least one fluid within the stack,
- a load-applying mechanism with a first tightening unit adapted to apply a tightening load to the at least one stack arrangement in a stacking direction.

The load applying mechanism comprises a second tightening unit adapted to apply a tightening load to the manifold section of the stack. The first tightening unit and the second tightening unit are independent of each other.

The stack assembly has the advantage that a decoupled load applying mechanism for each stack arrangement is provided, allowing the application of different forces, in particular compression forces, to the stack and to the manifold section. Further, the stack assembly allows a compact arrangement in a compact enclosure.

Preferably, the stack assembly comprises planar stacks.

Each planar stack, which includes planar stacks with internal manifolding but also other planar stack types, is a stack of planar elements. This includes the cells that take care of the electrochemical reactions, and separator plates that separate these cells from one another and that distribute the gases over the cells, and electrically connects the electrochemical cells in series. Between two separator plates, at least one electrochemical cell is disposed. But there could also be more cells, for example, 4, or 9, or 16.

It is important that these separator plates, which are at least electrically conductive where they are in contact with the electrochemical cells, are electrically isolated from one another in the areas where they are not facing the electrochemical cells.

Otherwise, the current would not flow through the electrochemical cells but through places where the separator plates are in contact with one another. The cells are then short-circuited and not be functional anymore, and consequently there will be a loss in efficiency of the electrochemical cells.

In addition, there is the requirement that the gases that are distributed over the electrochemical cells, do not leak away. Therefore, materials have to be disposed that form a hermetic seal. These materials are typically disposed at the perimeter of each electrochemically active cell. In addition, compliant and/or dielectric materials may be disposed elsewhere, in order to improve the distribution of the mechanical compression.

In order to prevent short-circuiting within the stack, dielectric materials can be disposed at places where separator plates might get in contact with one another.

In order to prevent gas leaks, compliant materials that ideally reach 100% gas tightness upon compression can be disposed.

Different materials can be used to prevent short-circuiting. Usually, layers of dielectric material are disposed, such as dielectric oxide layers, for example alumina, or silica. Preferably, materials are used that are chemically inert to materials in neighboring layers, such as the separator plate, in order to prevent failure upon prolonged usage. Dielectric layers can in principle be very thin, for example less than 1 micron, but can be thicker.

Different materials can be used as compliant layer, such as mica, felt, or glass ceramics, or composites of materials with similar features. Glass ceramics are materials that upon heating become partly amorphous and partly ceramic. The ceramic fraction improves the mechanical properties of the layer.

Ideally, materials are used that are also dielectric, and so both functionalities are fulfilled by the same material. Compliant layers can in principle be thin, such as 1 micron, but can also be thicker.

In order to obtain a planar stack with all materials fulfilling their characteristics, the stack is kept under compression during its complete usage trajectory (heating, operation, idling, cooling). The compression makes sure that the electrochemical cells are contacting the separator plates, and makes sure that the seals are compressed to obtain high hermeticity. The amount of compression that is needed depends on the mechanical properties of the materials used in the stack throughout their operational lifetime (sealants, dielectric materials, cells, separator plates, etc.)

What makes planar stacks with internal manifolding special is that the separator plates also include means for internal gas distribution. In contrast with stacks that have external manifolding, and where gases are supplied to each individual repeating element (i.e. an arrangement of one or more cells and their neighboring separator plates) though openings provided at the perimeter of each repeating element, stacks that deploy internal manifolding have provisions where gases are supplied or extracted through common openings, for example at the bottom or top of the stack, whilst the repeating elements are gas tight at their perimeter.

In order to realize internal manifolding, each separator plate preferably includes at least two openings in its perimeter, one for gas supply and one for gas extraction. The positions of these openings can, for example, be one at each opposite end of the separator plate. Where gas is supplied at one end, is then distributed within the active area, for example through gas channels provided in the separator plate, and is then collected and extracted through the opening at the other side.

In order to form an internal manifold, the openings provided in each separator plate are fluidly connected with the manifold openings in the next separator plate. And, similar to what was said previously for the active area, short-circuiting and gas leakage need to be prevented by providing dielectric materials and materials with sealing properties, where ideally materials with both functions combined are preferred.

The materials, their dimensions and their functionality requirements, as well as the local mechanical properties of the separator plates to prevent gas leakage and short-circuiting in the active are of the stack and the internal manifolding area of the stack may be different. Therefore, different compression requirements for the active area and the manifold area may exist, which is best realized with means where the compression of the manifold area is decoupled from the stack compression.

The at least one stack arrangement can be mounted on a guide rail via a bottom plate comprising slidable elements to allow lateral displacement of said at least one stack arrangement. The slidable elements can be attached to the bottom plate via fastening elements.

Preferably, the first and/or the second tightening unit comprises clamping means, preferably tie rods. Besides the top plate and the base plate, which can be clamping means, tie rods can be connected to the top plate and/or the base plate of the stack arrangement. Tie rods can also be connected to the manifold section. Most preferably, the first tightening unit and the second tightening unit comprises clamping means which are independent of each other. For example, the first tightening unit can comprise first tie rods and the second tightening unit can comprise second tie rods that are different from the first tie rods. The clamping means and in particular the tie rods are independent of each other. Tie rods exerting tightening force on the stack can be called stack compression tie rods. Tie rods exerting tightening force on the manifold can be called manifold compression tie rods.

It is also possible that the second tightening unit and in particular the tie rods thereof are further mechanical decoupled by an additional slidable element disposed within the top plate. Hence, the stack assembly can comprise first slidable elements at the bottom side to allow lateral displacement and at least second slidable elements in the top plate.

The tie rods can comprise tightening nuts at either end for tightening the rods.

The bottom plate can comprise oversized holes through which the clamping means, preferably tie rods, extend. The oversized holes allow movement of the tie rods if there is a lateral displacement of the stack arrangement.

Most preferably, the tie rods also comprise a piece that can slidably move inside the top plate in order to mechanically decouple the manifold compression from the stack compression.

Preferably, the at least one sealing element is made of a material that is configured to become gas tight upon mechanical compression. The material is preferably a compliant material such as mica, a vitreous material such as a glass ceramic, a braze, or a combination of materials, in particular a combination of the aforementioned materials. In certain cases, compression is combined with thermal treatment to obtain gas tightness.

The sealing element can be disposed in the stack arrangement, in the manifold section, or in both sections.

The stack arrangement can comprise at least two, preferably a plurality of, solid oxide fuel cells or solid oxide electrolysers, each constituting an electrolyte electrode assembly and separators sandwiching said electrolyte electrode assembly.

Preferably, the electrolyte electrode assembly comprises an anode, a cathode and an electrolyte interposed between said anode and said cathode.

Most preferably, the stack assembly comprises two or more stack arrangements, preferably each being mounted on a rail guide. The mounting on a rail guide can be done via individual bottom plates. The mounting on a rail guide allows movement of a stack arrangement independent of the other stack arrangements. Each stack arrangement can be constructed as previously described.

Preferably, stack arrangements are mounted on a common rail guide. The stack assembly contains at least one of such common rail guides.

At least one fluid unit can be connected to said housing to guide fluid, in particular gas, through the at least one stack arrangement disposed in the stack assembly. The fluid unit can comprise pipes and valves to direct the flow of the fluid. The housing can comprise an inlet side for the fluid unit and an outlet side for the fluid unit.

Preferably, the housing comprises at least two compartments, a hot zone compartment and a cold zone compartment, preferably the hot zone comprising the stack arrangement. By hot zone compartment it is meant that this compartment is exposed to heat around 700-800 °C, while the cold zone compartment is below 150 °C and preferably between 23 °C and 100 °C. Thus, the housing is encasing the hot zone compartment and the cold zone compartment.

Advantageously, said clamping means extend from the cold zone compartment to the hot zone compartment.

The hot zone compartment and the cold zone compartment can be separated by the bottom plate.

The clamping means can comprise spring-loaded tie rods. The springs can be in the form of coil springs; bellows; balloons, or any other material that exerts compression. Preferably, the clamping means for the first tightening unit comprise springs that are different to the springs provided for the second tightening unit. Thus, the springs can be chosen based on the needed mechanical force acting on the manifold section or on the stack arrangement and can be adjusted accordingly. Typically, exertion of a lower mechanical force on the manifold section is required compared to the mechanical force for compressing the stack arrangement.

Preferably, the springs are located in the cold zone compartment. In particular coil springs are prone to losing their mechanical properties upon exposure to heat and last longer in colder regions s they experience less creep. This, in turn, provides a longer durability of the system and allows using cheaper materials making the system more cost efficient.

The tie rods, either the stack compression tie rods, the manifold compression tie rods or both, can further be equipped with bellows arranged within the heat insulating material. The bellows can be arranged within a wider metal tube welded onto a thinner metal tube through which the tie rod extend. The bellow can compensate for mechanical stress that can occur due to temperature changes.

The wider metal tube may comprise a hollow compartment which allows gas to be guided within this hollow compartment. The compartment can be used to collect gas that is sent to or arrives from the stack arrangement. Pipes may lead from the stack arrangement to the hollow compartment within the insulation material.

An electrical power connection can be provided to the lower end of the tie rod or tie rods.

The present invention is advantageous over the prior art in that it uses a compression system that allows for mechanical decoupling of the compression of the stack section that compresses the electrochemical cells and the compression of the manifold section by means of a spring-loaded assembly located in a cold section of the module and tie rods that exert mechanical compression to parts located in the stack compartment, the guide rail, and mechanical decoupling between the respective stacks placed on the guide rail, resulting in less mechanical stress, and therefore reduces the risk of irreversible deformation or detrimental failure of parts that otherwise could limit the lifetime of the stack.

Another aspect of the invention relates to an electrochemical device comprising a stack assembly as previously described. The electrochemical device can be a device as known in the art. For example, the device can be equipped with at least one stack assembly as previously described. At least one fluid inlet line may lead to the stack assembly, at least one fluid outlet line may exit the stack assembly. A reformer with an integrated heat exchanger can be located upstream to the at least one stack assembly. The stack assembly, in particular the stack arrangements, may also be referred to as electrochemical cell or electrochemical reactor. Temperature sensors can be arranged in the at least one fluid inlet line and/or in the at least one fluid outlet line for detecting the inlet temperature of the at least one fluid and/or the outlet temperature of the at least one fluid. Further, a pre-heater may be arranged between the reformer and the stack assembly. The pre-heater may allow heat exchange between different fluid lines within the electrochemical device to allow a most efficient mode of operation. The electrochemical device is preferably a high-temperature electrochemical device. The electrochemical cell can be a solid oxide fuel cell, a solid oxide electrolyzer, or a reversible solid oxide cell.

The invention is explained in more detail with the aid of figures. These are preferred embodiments which are not to be understood as limiting. It shows:
- Figure 1: A side view of an embodiment of a stack arrangement for a stack assembly according to the invention.
- Figure 2: A second side view of the embodiment of a stack arrangement.
- Figure 3: A sectional view of the embodiment of the stack arrangement in more detail.
- Figure 4: Side view of the embodiment of figure 3.
- Figure 5: Top view of the embodiment.
- Figure 6: Bottom view of the embodiment.
- Figure 7: A perspective view of a stack assembly with three stack arrangements according to the invention.

The same reference signs in the figures identify the same elements.

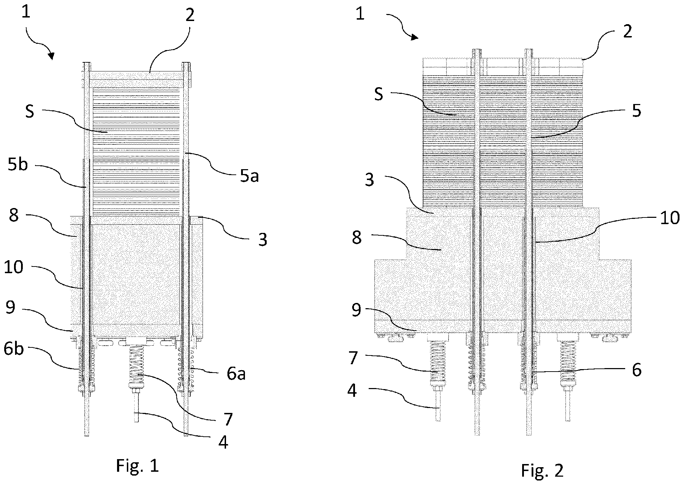

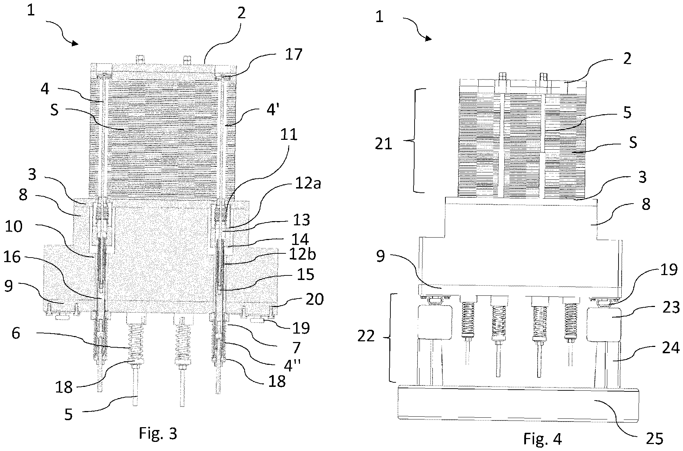

Figure 1 shows a side view of a first embodiment of a stack arrangement 1. The stack S is shown in the center. The stack arrangement 1 has a top plate 2 and a base plate 3, between which the stack S is usually clamped attached. The figure shows further one centrally arranged manifold compression tie rod 4, accompanied by two stack compression tie rods 5a and 5b at either side. The tie rods 4, 5a, 5b are spring loaded. The manifold compression tie rods 4 comprise a spring 7 that is different from the springs 6a and 6b for the stack compression tie rods. The stack assembly 1 comprises further a thermally insulating material 8. Beneath the insulation material 8 is a bottom plate 9. The insulation material 8 and the bottom plate 9 separate a hot compartment 21 (figure 4) from a cold compartment 22 (figure 4). The tie rods are arranged within ceramic tubes 10 spanning from the hot compartment to the cold compartment.

Figure 2 shows the embodiment of a stack arrangement 1 according to the invention in a second view. The stack arrangement 1 has the two stack compression tie rods 5 now centrally arranged, accompanied by two manifold compression tie rods 4 at either side. The stack compression tie rods 5 extend through the insulation material.

Figure 3 shows the embodiment of figure 2 in more detail. The stack arrangement 1 also comprises a top plate 2 and a base plate 3 between which the stack (S) is usually arranged. Inside the thermal insulation 8, the interior of the manifold compression tie rods 4 can be seen. The spring-loaded tie rods 4 exert compression to a metal tube 12b that on its top is welded via weld 14 onto a wider part of the tube 12a. The wider part of the metal tube 12a houses a bellow 11 to compensate for thermal expansion. Hence, mechanical stress that can occur due to temperature changes can be compensated. The bellows 11 can be present either in the manifold compression tie rods 4 or in the stack compression tie rods 5. A hollow chamber 13 underneath the bellow 11 can collect gas that is sent to or arrives from the stack arrangement. At the top end, the manifold compression tie rods 4 end at a slidable piece 17, that can slidably move inside the top plate 2 in order to mechanically decouple the manifold compression from the stack compression. In the centre two stack compression tie rods 5 are arranged. The springs 6 for the spring-loaded stack compression tie rods 5 are different than the springs 7 for the spring-loaded manifold compression tie rods 4. The selection of the right spring allows the tuning of the force applied to the stack or the manifold. The more it is compressed, the higher the force acting on the surrounding. The figure shows further a tightening nut 18 on the lower end of the rod for tightening the rod 4 or 5. Sign 15 refers to the bottom end of the top rod. The stack assembly 1b is also equipped with a slidable element 19 which is affixed to the bottom plate 9 via fastening elements 20. A ceramic junction 16 between a bottom rod 4'' and a top rod 4' is used for electrical decoupling, that stops current flow. Thus, no short circuit can occur. The ceramic junction is a dielectric material.

Figure 4 provides a view more details on the surrounding of the stack arrangement 1 to form a stack assembly. The stack arrangement 1 is resting on guide rails 23 via the slidable elements 19. The guide rails 23 are attached to a base 25 via a support structure 24. The guide rails 23 allow for a free lateral movement of the stack S. Further, figure 4 shows the hot compartment 21 and the cold compartment 22 separated by the insulation material 8.

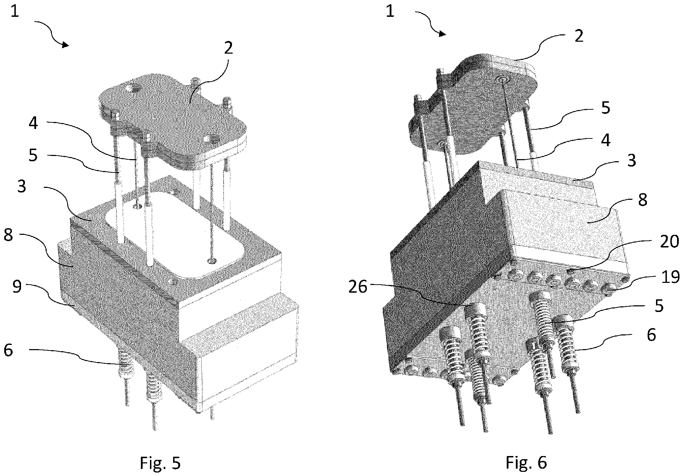

Figure 5 shows a top view of the stack arrangement 1. Figure 6 shows a bottom view of the stack arrangement 1. In the bottom view of figure 6, it can be seen that the bottom plate 9 comprises oversized holes 26 which allow for lateral displacement of the tie rods 4 and 5.

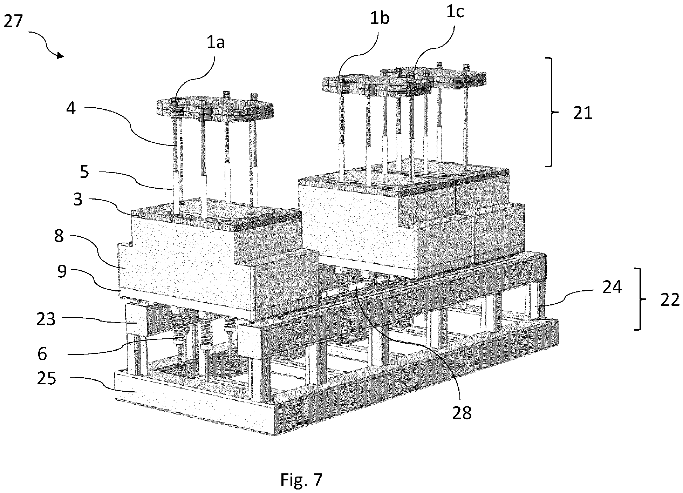

Figure 7 shows a perspective view of a stack assembly 27 according to the present invention. In this particular case, the stack assembly 27 comprises three stack arrangements 1a, 1b, 1c with space 28 for a fourth stack arrangement. The stack arrangements are shown without stacks. Each stack arrangement 1a, 1b, 1c is designed as previously described. The stack arrangements 1a, 1b, 1c are resting on common guide rail 23. The bottom plate 9 together with the insulation 8 divides the stack assembly 27 into a hot compartment 21 and a cold compartment 22 as previously described. If the fourth stack arrangement is put on the common rail, the four bottom plates 9 and the thermal insulations 8 are more or less continuous, and thereby provide sufficient thermal separation to form the hot and cold zone compartment 21 and 22. Together with a housing (not shown), the stack arrangements form a particular embodiment of a stack assembly 27 according to the invention.

## Claims

1. A stack assembly (27) for a solid oxide fuel cell (SOFC) or solid oxide electrolyser (SOE) device, or reversible solid oxide cell device, the assembly (27) comprising:
- a housing,
- at least one stack arrangement (1) mounted within said housing,
the at least one stack arrangement (1) comprising:
- a base plate (3),
- a top plate (2),
- a stack (S) mounted between said base plate (3) and said top plate (2),
- at least one sealing element disposed in the at least one stack arrangement (1) to provide a fluid-tight stack assembly (27),
- a manifold section for distributing at least one fluid within the stack (S),
- a load applying mechanism with a first tightening unit (5) adapted to apply a tightening load to the at least one stack arrangement in a stacking direction,
**characterized in that** the load-applying mechanism comprises a second tightening unit (4) adapted to apply a tightening load to said manifold section of the stack (S) and wherein the first tightening unit (5) and the second tightening unit are independent of each other.

2. The stack assembly (27) according to claim 1, wherein the at least one stack arrangement (1) is mounted on a guide rail (23) via a bottom plate (9) comprising slidable elements (19) to allow lateral displacement of said at least one stack arrangement (1).

3. The stack assembly (27) according to one of the previous claims, wherein the first (5) and/or the second (4) tightening units comprises clamping means, preferably tie rods.

4. The stack assembly (27) according to claim 3, wherein the bottom plate (9) comprises oversized holes (26) through which the clamping means, preferably tie rods, extend.

5. The stack assembly (27) according to one of the previous claims, wherein the at least one sealing element is made of a material that is configured to becomes gas tight upon mechanical compression, preferably mica, a glass ceramic, braze, or a combination thereof.

6. The stack assembly (27) according to one of the previous claims, wherein the stack arrangement (1) comprises at least two, preferably a plurality of, solid oxide fuel cells, solid oxide electrolysers, or reversible solid oxide cells, each constituting an electrolyte electrode assembly and separators sandwiching said electrolyte electrode assembly.

7. The stack assembly (27) according to claim 6, wherein the electrolyte electrode assembly comprises an anode, a cathode and an electrolyte interposed between said anode and said cathode.

8. The stack assembly (27) according to one of the previous claims, wherein the stack assembly (27) comprise two or more stack arrangements (1), preferably each being mounted on a rail guide (23).

9. The stack assembly (27) according to one of the previous claims, wherein at least one fluid unit is connected to said housing to guide fluid, in particular gases, through the at least one stack arrangement (1) disposed in the stack assembly (27).

10. The stack assembly (27) according to one of the previous claims, wherein the housing comprises at least two compartments, a hot zone compartment (21) and a cold zone compartment (22), preferably the hot zone compartment (21) comprising the stack arrangement.

11. The stack assembly (27) according to claim 10, wherein said clamping means extend from the cold zone compartment (22) to the hot zone compartment (21).

12. The stack assembly (27) according to one of claims 10 or 11, wherein the hot zone compartment (21) and the cold zone compartment (22) are separated by the bottom plate (9).

13. The stack assembly (27) according to one of claims 3 to 12, wherein the clamping means comprises spring-loaded tie rods (4, 5).

14. The stack assembly (27) according to claim 13, wherein the springs (6, 7) are located in the cold zone compartment (22) .

15. An electrochemical device comprising a stack assembly according to one of claims 1 to 14.
